(19) **Europäisches Patentamt**

**European Patent Office**

**Office européen des brevets**

(11) **EP 1 047 519 B1**

(12) **EUROPÄISCHE PATENTSCHRIFT**

(45) Veröffentlichungstag und Bekanntmachung des Hinweises auf die Patenterteilung:
**13.03.2002 Patentblatt 2002/11**

(51) Int Cl.⁷: **B23C 5/20**

(21) Anmeldenummer: **98955820.0**

(86) Internationale Anmeldenummer:
**PCT/IB98/01793**

(22) Anmeldetag: **11.11.1998**

(87) Internationale Veröffentlichungsnummer:
**WO 99/36217 (22.07.1999 Gazette 1999/29)**

(54) **SCHNEIDPLATTE FÜR FRÄSWERKZEUGE**

CUTTING PLATE FOR MILLING CUTTERS

PLAQUETTE DE COUPE POUR OUTILS DE FRAISAGE

(84) Benannte Vertragsstaaten:
**DE FR GB IT**

(30) Priorität: **13.01.1998 CZ 9898**

(43) Veröffentlichungstag der Anmeldung:
**02.11.2000 Patentblatt 2000/44**

(73) Patentinhaber: **Pramet Tools, S.R.O.**
**787 53 Sumperk (CZ)**

(72) Erfinder:
• **MARSICEK, Roman**
**140 00 Praha 4 (CZ)**
• **SKYPALA, Ignác**
**787 01 Sumperk (CZ)**

(74) Vertreter: **Jeck, Anton, Dipl.-Ing.**
**Patentanwalt,**
**Klingengasse 2**
**71665 Vaihingen/Enz (DE)**

(56) Entgegenhaltungen:
**EP-A- 0 585 800     DE-A- 4 402 759**
**DE-A- 4 411 475     DE-U- 9 302 363**
**FR-A- 2 172 542**

**Beschreibung**

Die Erfindung betrifft eine auswechselbare Schneidplatte für Fräswerkzeuge nach dem Oberbegriff des Anspruches 1.

Es sind verschiedene Schneidplattentypen aus gesintertem Material, Hartmetall, Cermets und kubischem Bornitrid, z. B. gemäß der WO 95/07784 bekannt, die sich durch positive Geometrien mit hohen Stirnwinkelwerten sowie anderen geometrischen Elementen auszeichnen, welche den diskontinuierlichen Schnittprozeß vorteilhaft beeinflussen. Gewöhnlich sind die Schneidplatten im Wesentlichen aus prismatischen Körpern gebildet, die eine ebene Grundfläche besitzen, an welche die Seitenflächen der Freiflächen anknüpfen, die sich mit der oberen Fläche der Spanfläche schneiden. All diese Schneidplatten haben mindestens eine Schneide, deren Kante durch die Schnittlinie der Oberfläche der Spanfläche oder der Freifläche gebildet ist.

Die Schneidplatte gemäß der EP 457488 wird im Wesentlichen durch einen Flächner (Parallelepiped) gebildet und ist mit zwei gegenüberliegenden Hauptschneiden versehen, die durch die entsprechenden Teile der Spanfläche und die Freifläche begrenzt sind. Dabei bestehen die Oberflächen der Freiflächenwände, die zu diesen Hauptschneiden gehören, aus drei Teilen, wobei der erste, an die Spanfläche angrenzende Teil, die erste Ecke der Freifläche bildet, der zweite, an die Basis der Schneidplatte angrenzende Teil, die zweite Ecke der Freifläche und der dazwischenliegende Verbindungsteil bezüglich des ersten und zweiten Teils quer orientiert ist und außerhalb der Schneidplatte zusammen mit dem ersten Teil einen Winkel bildet, der weniger als 180° beträgt. Dabei liegt der erste Freiflächenwinkel im Bereich der Werte von 7° bis 20°; er ist bedeutend kleiner als der zweite Freiflächenwinkel, dessen Wert zwischen 0° und 15° liegt. Zwischen den übrigen Freiflächenwänden und den angrenzenden Teilen der Spanfläche sind zwei Nebenschneiden gebildet, wobei die entsprechenden Freiflächen- und Spanflächenteile stetig gekrümmt sind, was einen unveränderlichen Arbeitswinkel der Freifläche und der Stirn im Hinblick auf das Gehäuse der Fräse bedeutet. Dabei sind die Nebenschneiden von der Spanfläche durch Facetten von gekrümmter Form abgegrenzt. Aufgrund der stetigen Krümmung der einzelnen Teile der Freifläche und der Spanfläche sowie der gekrümmten Oberfläche der Facetten ist die Herstellung der Schneidplatte sehr kompliziert; außerdem ist hier die Ableitung der während des Fräsens entstehenden Wärme, die in die Schneidplatte gelangt, nicht befriedigend gelöst.

Ausgehend von dem obigen Stand der Technik liegt der Erfindung die Aufgabe zugrunde, hier Abhilfe zu schaffen.

Die gestellte Aufgabe wird erfindungsgemäß durch die Merkmale des Anspruches 1 gelöst.

Es handelt sich also um eine Schneidplatte für Fräswerkzeuge in Form eines Prismas mit einer mittigen Spannöffnung. Die Schneidplatte ist durch eine untere Basis, eine Stirn und eine Mantel-Freifläche begrenzt und mit zwei gegenüberliegenden Hauptschneiden, die an den längeren Seiten durch eine Haupt-Stirnfläche und die Haupt-Freiflächen abgegrenzt sind, zwei gegenüberliegenden Nebenschneiden, die an ihren kürzeren Seiten durch die Neben-Stirnflächen und die Neben-Freiflächen begrenzt sind, und an den kürzeren Seiten der Schneidplatte ferner im Bereich der höheren gegenüberliegenden Ecken mit Schleppschneiden versehen sind. Die Schleppschneiden sind durch die Stirnflächen und die Schleppflächen abgegrenzt, wobei die Neben-Freifläche sowie die Schleppflächen durch Übergangsflächen miteinander verbunden sind. Die Freiflächen der Mantelflächen sind durch eine Mantel-Freiflächenfacette und eine ebene Freifläche gebildet, die mittels einer ebenen, dazwischenliegenden Fläche miteinander verbunden sind, wobei die Freiflächenfacette mit der zur Basis senkrechten Ebene einen ersten Winkel der Freifläche $\alpha1$ bildet, die Freiflächen in Bezug zur Basis unter einem dritten Freiflächenwinkel $\alpha2$ und die dazwischenliegende Fläche unter einem zweiten Freiflächenwinkel $\alpha3$ gebildet ist, wobei die Beziehung

$$\alpha1 \leq \alpha2 \leq \alpha3$$

gilt. Die Ebenen der Stirnflächen und der Stirnflächen in Richtung der Freiflächen-Schneidkanten sind unter einem Stirnwinkel $\Gamma_0$ abgeschrägt.

Weitere zweckmäßige und vorteilhafte Ausgestaltungen der Erfindung gehen aus den Unteransprüchen hervor.

Bei einer vorteilhaften Ausführung der Erfindung liegt der erste Winkel der Freifläche $\alpha1$ vorzugsweise im Bereich der Werte

$$0° \leq \alpha1 \leq 3°,$$

der zweite Freiflächenwinkel $\alpha2$ vorzugsweise im Bereich der Werte

$$3° \leq \alpha2 \leq 8°$$

und der dritte Freiflächenwinkel $\alpha3$ vorzugsweise im Bereich der Werte

$$6° \leq \alpha3 \leq 20°,$$

wobei die Breite der Mantel-Freiflächenfacette im Wesentlichen konstant ist, für den Stirnwinkel $\Gamma0$ die Beziehung

$$0° \leq \Gamma0 \leq 30°$$

gilt und die Haupt-Stirnfläche sowie die Neben-Stirnflächen mit einer Mantel-Stirnfacette versehen sind.

Zwecks Erhöhung der Werkzeugslebensdauer ist es von Vorteil, wenn die absteigenden Teile der Haupt-Stirnflächen und/oder der Neben-Stirnflächen mit Rippen versehen sind, welche in Form von Kugelkappen oder durch zwei Kugelkappen gebildet sind, die mittels einer zylindrischen Fläche miteinander verbunden sind, oder aber durch zwei Kugelkappen gebildet sind, die mittels einer zylindrischen Fläche miteinander verbunden sind, welche durch eine den Innenrand der Stirnfacette durchquerende Ebene abgestützt ist.

Durch die vorgeschlagenen Maßnahmen wird die Herstellung der Schneidplatte vereinfacht, was eine Senkung der Fertigungskosten zur Folge hat. Durch die Herausbildung der Freiflächenfacette kommt es zur Dämpfung der während des Fräsvorgangs entstehenden Vibrationen und die Rippen an der Stirn verringern den Kontakt des Spans mit dem Werkzeug und somit auch die Wärmemenge, die sich in der Kontaktzone zwischen dem Span und der Schneidplattenstirn bildet. Diese Änderung an der Schneidplattenstirn führt zur Verringerung der Schneidtemperatur und im Endeffekt zur Erhöhung der Werkzeugslebensdauer.

Ein ausführendes Beispiel der Erfindung ist in der Zeichnung schematisch dargestellt und wird im Folgenden näher erläutert. Es zeigen

Fig. 1                 eine axonomische Ansicht der Grundausführung einer Schneidplatte mit Rippen in Form von Kugelkappen,

Fig. 2 und Fig. 3        axonometrische Ansichten von alternativen Ausführungen der Schneidplatten mit zylindrischen Rippen bzw. mit zylindrisch abgestuften Rippen und

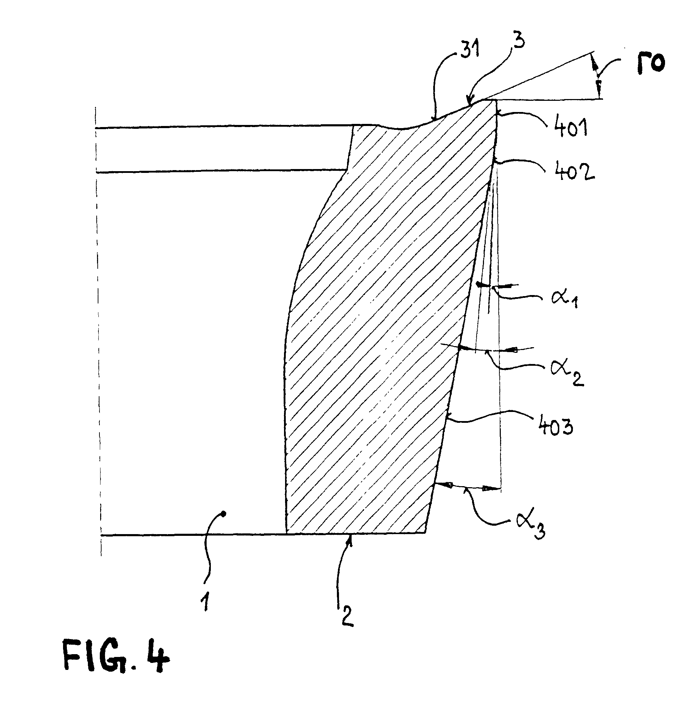

Fig. 4                 einen Querschnitt durch die Schneidplatte mit angedeutetem Freiflächenwinkel und der Hauptschneide.

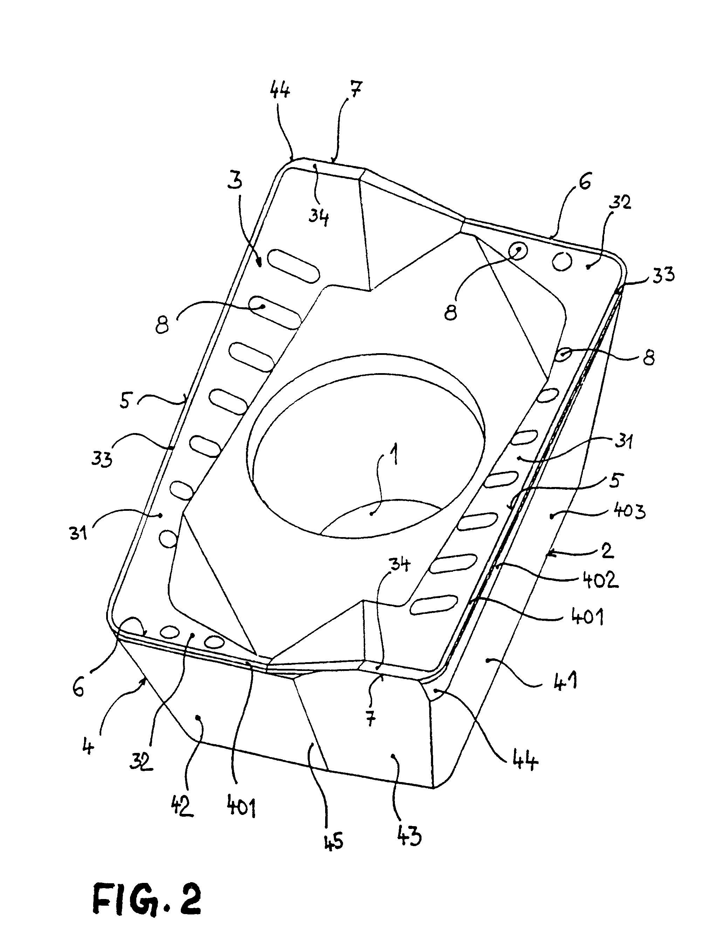

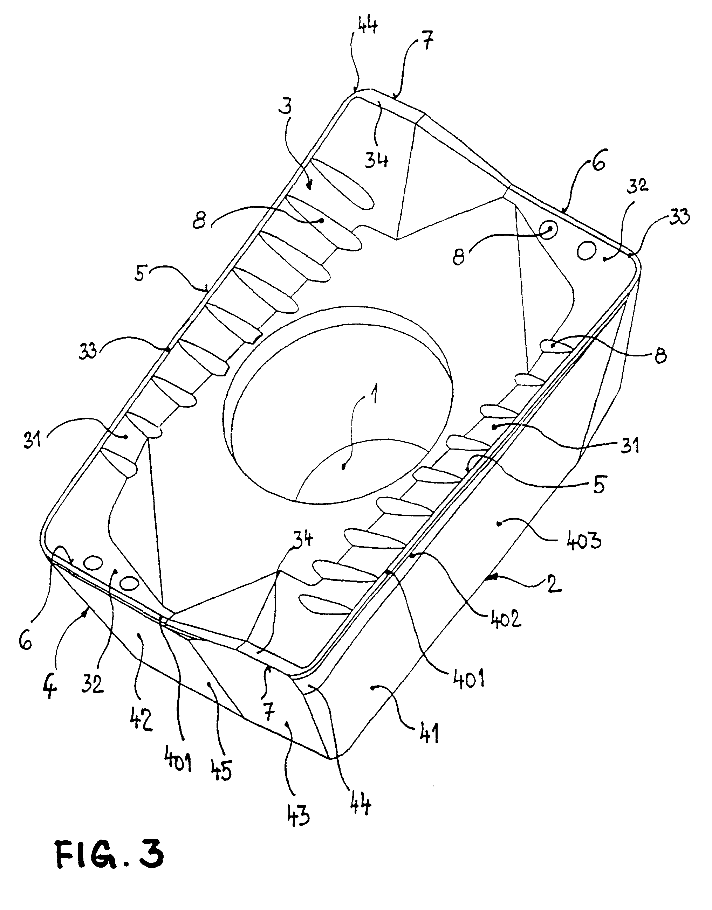

Die Schneidplatte hat die Form eines prismatischen Parallelflächners, der mit einer mittigen Spanöffnung 1 versehen und durch eine untere Basis 2, eine Stirn 3 und eine Mantel-Freifläche 4 begrenzt ist. Die Schneidplatte ist an ihren längeren Seiten, also im Bereich der primären Geometrie, mit zwei gegenüberliegenden Hauptschneiden 5 versehen, welche durch zwei Hauptstirnflächen 31 und Hauptfreiflächen 41 abgegrenzt sind. An den kürzeren Seiten, also im Bereich der sekundären Geometrie, ist sie mit zwei gegenüberliegenden Nebenschneiden 6, welche durch zwei Neben-stiyn flächen 32 und Neben-Freiflächen 42 begrenzt sind, versehen. Der Neigungswinkel der Hauptschneide 5 ist im Verhältnis zur Ebene der Basis 2 konstant, wenn die Hauptschneiden 5 der Schneidplatte sich im Gegensinn so neigen, dass sie zusammen mit den entsprechenden Kanten der Basis 2 einen spitzen Winkel bilden, wodurch sie einen zwar zunehmenden, aber entgegengesetzt gerichteten Achswinkel der Haupt-Stirnflächen 31 zu den entgegenstehenden Haupt-Freiflächen 41 der Schneidplatte sichern. Die Schneidplattenhöhe an zwei gegenüberliegenden Ekken der Stirn 3 ist demzufolge größer als die an den anderen zwei gegenüberliegenden Ecken der Stirn 3. Auf dem gesamten Umfang der Stirn 3, also auf den Haupt-Stirnflächen 31 sowie auf den Neben-Stirnflächen 32, der in Fig. 2 und 3 dargestellten Schneidplatte ist für die mittleren, die Halbschrupp- und die Schrupp-Arbeitssäge, eine Stirnfacette 33 (Fig. 2, 3) gebildet.

Die Mantel-Freifläche 4 mit den Freiflächen 41, 42 ist durch die Mantel-Freiflächenfacette 401 und die ebene Freifläche 403 gebildet, welche durch die ebenfalls ebene, dazwischenliegende Fläche 402 miteinander verbunden sind. Die Freiflächenfacette 401 ist durch Schneidkanten der Hauptschneiden 5 und die Nebenschneiden 6 abgegrenzt, weist eine konstante Breite auf und bildet zusammen mit der zur Basis 2 senkrechten Ebene den ersten Freiflächenwinkel $\alpha1$, der im Bereich von $0° \leq \alpha1 \leq 3°$ liegt. Die Freifläche 403 ist durch das Hinterschleifen unter dem dritten Freiflächenwinkel $\alpha3$ gebildet, dessen Größe im Bereich $6° \leq \alpha3 \leq 20°$ liegt. Schließlich ist die dazwischenliegende Verbindungsfläche 402 unter dem zweiten Freiflächenwinkel $\alpha2$ gebildet, der im Bereich von $3° \leq \alpha2 \leq 8°$ liegt, wobei

für das gegenseitige Verhältnis der Freiflächenwinkel $\alpha_1$, $\alpha_2$, $\alpha_3$ die Beziehung

$$\alpha_1 \leq \alpha_2 \leq \alpha_3$$

gilt. Die kürzeren Schneidplattenseiten sind ferner mit Schlichtflächen 43 versehen, die gegenüberliegend an den kürzeren Seiten der Schneidplatte im Bereich der höheren gegenüberliegenden Ecken gebildet sind. Die Schlichtflächen 43 sind in Form von ebenen Flächen oder als Teil von Rotationsflächen gebildet und sind mit den Haupt-Freiflächen 41 mittels abgerundeter Flächen 44 und mit den Neben-Freiflächen 42 mittels Übergangsflächen 45 verbunden. Die Schlichtflächen 43 bilden im Bereich der Stirn 3 Schleppschneiden 7, welche in die Stirnschlichtflächen 34 übergehen, die ggf. mit Stirnfacetten 33 versehen sind.

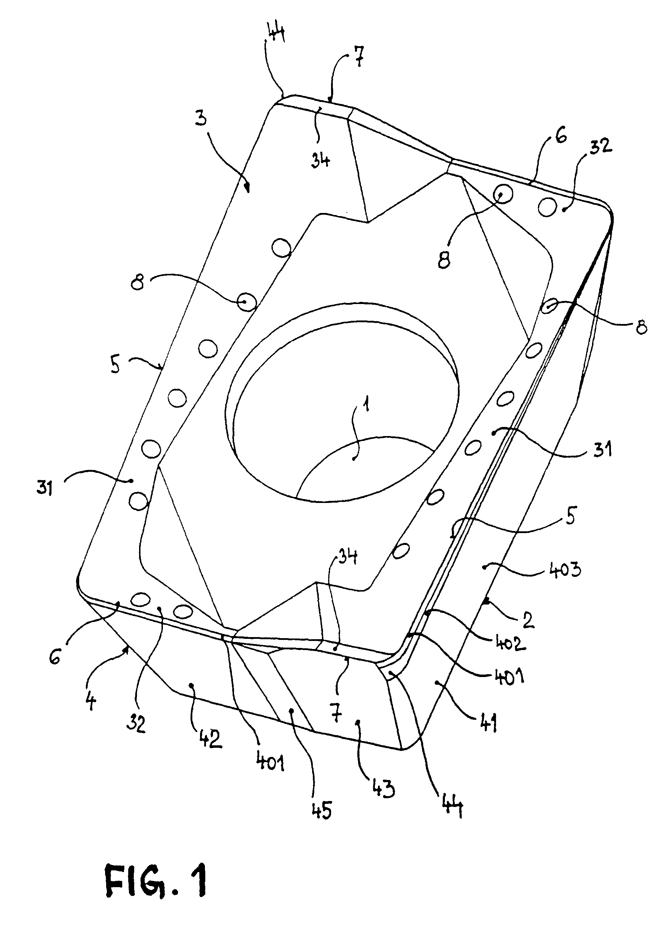

Die Ebenen der Haupt-Stirnflächen 31, der Neben-Stirnflächen 32 und der Stirnflächen 34 sind in Richtung der Schnittkanten der Schneiden 5, 6, 7 zur Spannöffnung 1 unter dem Stirnwinkel $\Gamma_0$ abgeschrägt, der höchstens 30° beträgt, und folglich gilt das Verhältnis $\Gamma_0 \leq 30°$. An den absteigenden Teilen der Haupt-Stirnflächen 31 und der Neben-Stirnflächen 32 sind Rippen 8 gebildet, deren Größe und Form insbesondere an den Haupt-Stirnflächen 31 je nach der voraussichtlichen Verwendung der Schneidplatte unterschiedlich ist. Für die Fein- und Abschlußarbeitsgänge haben die Rippen 8 die Form von Kugelkappen, wie in Fig. 1 dargestellt ist. Dagegen sind die für die mittleren und Halbschrupp-Arbeitsgänge bestimmten Rippen 8 als zwei mit einer zylindrischen Fläche miteinander verbundene Kugelkappen ausgebildet, wie in Fig. 2 zu sehen ist. Die Rippen 8 für die Schruppschnitt-Arbeitsgänge sind in Form von zylindrischen Flächen ausgebildet, welche durch eine den Innenrand der Stirnfacette 33 durchquerende Ebene abgestützt sind, wie Fig. 3 darstellt.

Beim Fräsen kann die Schneidplatte in nicht gezeigten, in regelmäßigen Abständen entlang des Umkreises der Fräse verteilten Betten verschiedenartig angebracht sein. So kann sie zum Stirnfräsen mit den Neben-Freiflächen 42 und den Nebenschneiden 6 oder zum Eckfräsen unter einem Winkel von 90° verwendet werden, bei dem die Hauptschneide 5 und die Haupt-Freiflächen 41 sowie die zugeordnete Schruppschnittfläche 43 und die Schleppschneide 7 im Eingriff stehen. Während der Bearbeitung verformen dann die Rippen 8 an den absteigenden Teilen der Stirn 3 den abgetragenen Span, vermindern somit den Kontakt des Spans mit dieser Stirn 3 der Schneidplatte und verringern demzufolge die Wärmemenge, die sich in der Kontaktzone zwischen dem Span und der Stirn 3 der Schneidplatte bildet.

Gewerbliche Anwendbarkeit

Die Schneidplatte kann mit Vorteil für die Materialbearbeitung auf Rotationsfräsen verwendet werden, und zwar für Werkstoffe, die sowohl einen zähen, plastisch verformten, als auch einen kurzen, plastisch unverformten Span bilden, angefangen vom Schlichtfräsen mit minimaler Spanabnahme, über die mittlere Bearbeitung und das Halbschruppen und bis hin zum Schruppen des Materials.

**Patentansprüche**

1. Schneidplatte für Fräswerkzeuge in Form eines Prismas mit einer mittigen Spannöffnung (1), wobei die Schneidplatte durch eine untere Basis (2), eine Stirn- (3) und eine Mantelfläche (4) begrenzt und mit zwei gegenüberliegenden Hauptschneiden (5), welche an den längeren Seiten der Schneidplatte durch Haupt-Stirnflächen (31) und Haupt-Freiflächen (41) der Mantelfläche (4) abgegrenzt sind, zwei gegenüberliegende Nebenschneiden (6), die an den kürzeren Seiten der Schneidplatte durch Neben-Stirnflächen (32) der Stirnfläche (3) und Neben-Freiflächen (42) der Mantelfläche (4) begrenzt sind, und an den kürzeren Seiten der Schneidplatte ferner im Bereich von höheren gegenüberliegenden Ecken mit Schleppschneiden (7) versehen sind, welche durch Stirn-Schleppschneideflächen (34) der Stirnfläche (3) und Schleppschneideflächen (43) der Mantelfläche (4) abgegrenzt sind, wobei die Neben-Freiflächen (42) und die Schleppschneidflächen (43) der Mantelfläche (4) durch Übergangsflächen (45) miteinander verbunden sind, wobei ferner die Freiflächen (41, 42) der Mantelfläche (4) durch eine Mantel-Freiflächenfacette (401) und eine ebene Freifläche (403) gebildet sind, die mittels einer ebenen, dazwischenliegenden Fläche (402) miteinander verbunden sind, wobei die Freiflächenfacetten (401) mit der zur Basis (2) senkrechten Ebene einen ersten Freiflächenwinkel ($\alpha_1$) bildet, die Freifläche (403) in Bezug zur Basis (2) unter einem dritten Freiflächenwinkel ($\alpha_3$) und die dazwischenliegende Fläche (402) unter einem zweiten Freiflächenwinkel ($\alpha_2$) gebildet ist, und wobei die Ebenen der Haupt-Stirnflächen (31), der Neben-Stirnflächen (32) und der Stirn-Schleppschneideflächen (34) in Richtung der Hauptschneiden (5), der Nebenschneiden (6) und der Schleppschneiden (7) unter dem Stirnwinkel ($\Gamma_0$) abgeschrägt sind,
**dadurch gekennzeichnet,**
**dass** die Beziehung $\alpha_1 \leq \alpha_2 \leq \alpha_3$ gilt.

2. Schneidplatte nach Anspruch 1,
**dadurch gekennzeichnet,**
**dass** der erste Freiflächenwinkel ($\alpha$1) vorzugsweise im Bereich von

$$0° \leq \alpha1 \leq 3°$$

liegt.

3. Schneidplatte nach Anspruch 1 oder 2,
**dadurch gekennzeichnet,**
**dass** der zweite Freiflächenwinkel ($\alpha$2) vorzugsweise im Bereich von

$$3° \leq \alpha2 \leq 8°$$

liegt.

4. Schneidplatte nach einem der Ansprüche 1 bis 3,
**dadurch gekennzeichnet,**
**dass** der dritte Freiflächenwinkel ($\alpha$3) vorzugsweise im Bereich von

$$6° \leq \alpha3 \leq 20°$$

liegt.

5. Schneidplatte nach einem der Ansprüche 1 bis 4,
**dadurch gekennzeichnet,**
**dass** die Breite der Mantel-Freiflächenfacette (401) konstant ist.

6. Schneidplatte nach einem der Ansprüche 1 bis 5,
**dadurch gekennzeichnet,**
**dass** der Stirnwinkel ($\Gamma$0) im Bereich von

$$0° \leq \Gamma0 \leq 30°$$

liegt.

7. Schneidplatte nach einem der Ansprüche 1 bis 6,
**dadurch gekennzeichnet,**
**dass** die Haupt-Stirnflächen (31) sowie die Neben-Stirnflächen (32) mit einer Mantel-Stirnfacette (33) versehen sind.

8. Schneidplatte nach einem der Ansprüche 1 bis 7,
**dadurch gekennzeichnet,**
**dass** die absteigenden Teile der Haupt-Stirnflächen (31) und/oder der Neben-Stirnflächen (32) mit Rippen versehen sind.

9. Schneidplatte nach einem der Ansprüche 1 bis 8,
**dadurch gekennzeichnet,**
**dass** die Rippen (8) die Form von Kugelkappen aufweisen.

10. Schneidplatte nach Anspruch 8 oder 9,
**dadurch gekennzeichnet,**
**dass** die Rippen (8) durch zwei Kugelkappen gebildet sind, die mittels einer zylindrischen Fläche miteinander verbunden sind.

**11.** Schneidplatte nach einem der Ansprüche 8 bis 10,
**dadurch gekennzeichnet,**
**dass** die Rippen (8) durch zwei Kugelkappen gebildet sind, die mittels einer zylindrischen Fläche miteinander verbunden sind, welche durch eine den Innenrand der Stirnfacette (33) durchquerende Ebene abgestutzt ist.


**Claims**

**1.** Cutting plate for milling tools in the form of a prism having a central clamping orifice (1), the cutting plate being defined by a lower base (2), a front face (3) and an outer face (4) and being provided with two oppositely situated primary blades (5) which are separated on the longer sides of the cutting plate by primary front faces (31) and primary flanks (41) of the outer face (4), with two oppositely situated secondary blades (6) which are defined at the shorter sides of the cutting plate by secondary front faces (32) of the front face (3) and secondary flanks (42) of the outer face (4), and also with stripping blades (7) in the region of higher, oppositely situated comers on the shorter sides of the cutting plate, which stripping blades are separated by front stripping blade faces (34) of the front face (3) and stripping blade faces (43) of the outer face (4), the secondary flanks (42) and the stripping blade faces (43) of the outer face (4) being interconnected by transitional faces (45), the flanks (41, 42) of the outer face (4) also being formed by an outer flank facet (401) and a flat flank (403), which are interconnected by means of a flat, interposed face (402), the flank facets (401) forming with the plane perpendicular to the base (2) a first flank angle ($\alpha$1), the flank (403) being formed at a third flank angle ($\alpha$3) relative to the base (2), and the interposed face (402) being formed at a second flank angle ($\alpha$2), and the planes of the primary front faces (31), of the secondary front faces (32) and of the front stripping blade faces (34) being inclined in the direction of the primary blades (5), of the secondary blades (6) and of the stripping blades (7) at the leading angle ($\Gamma$0), **characterised in that** the equation $\alpha1 \leq \alpha2 \leq \alpha3$ applies.

**2.** Cutting plate according to claim 1, **characterised in that** the first flank angle ($\alpha$1) lies preferably within the range of:

$$0° \leq \alpha1 \leq 3°.$$

**3.** Cutting plate according to claim 1 or 2, **characterised in that** the second flank angle ($\alpha$2) lies preferably within the range of:

$$3° \leq \alpha2 \leq 8°.$$

**4.** Cutting plate according to one of claims 1 to 3, **characterised in that** the third flank angle ($\alpha$3) lies preferably within the range of:

$$6° \leq \alpha3 \leq 20°.$$

**5.** Cutting plate according to one of claims 1 to 4, **characterised in that** the width of the outer flank facet (401) is constant.

**6.** Cutting plate according to one of claims 1 to 5, **characterised in that** the leading angle ($\Gamma$0) lies within the range of:

$$0° \leq \Gamma0 \leq 30°.$$

**7.** Cutting plate according to one of claims 1 to 6, **characterised in that** the primary front faces (31) as well as the secondary front faces (32) are provided with an outer front facet (33).

**8.** Cutting plate according to one of claims 1 to 7, **characterised in that** the descending parts of the primary front faces (31) and/or of the secondary front faces (32) are provided with ribs.

**9.** Cutting plate according to one of claims 1 to 8, **characterised in that** the ribs (8) are in the form of calottes.

**10.** Cutting plate according to claim 8 or 9, **characterised in that** the ribs (8) are formed by two calottes which are interconnected by means of a cylindrical face.

**11.** Cutting plate according to one of claims 8 to 10, **characterised in that** the ribs (8) are formed by two calottes which are interconnected by means of a cylindrical face supported by a plane surface traversing the internal edge of the front facet (33).

**Revendications**

**1.** Plaquette de coupe en forme de prisme pour outils de fraisage, avec un orifice de serrage (1) central, la plaquette de coupe étant délimitée par une base inférieure (2), une surface frontale (3) et une surface latérale (4), et avec deux taillants principaux (5) face à face, qui sont délimités sur les côtés longs de la plaquette de coupe par des surfaces frontales principales (31) et des surfaces de dépouille principales (41) de la surface latérale (4), deux taillants secondaires (6) face à face, qui sont délimités sur les petits côtés de la plaquette de coupe par des surfaces frontales secondaires (32) de la surface frontale (3) et des surfaces de dépouille secondaires (42) de la surface latérale (4), et avec, en plus, des taillants d'entraînement (7), qui sont disposés sur les petits côtés de la plaquette de coupe dans la zone des coins face à face surélevés et qui sont délimités par des surfaces de coupe d'entraînement frontales (34) de la surface frontale (3) et des surfaces de coupe d'entraînement (43) de la surface latérale (4), dans laquelle les surfaces de dépouille secondaires (42) et les surfaces de coupe d'entraînement (43) de la surface latérale (4) sont reliées entre elles par des surfaces de transition (45), dans laquelle, en outre, les surfaces de dépouille (41, 42) de la surface latérale (4) sont formées par une facette de surface de dépouille (401) et une surface de dépouille plane (403), qui sont reliées entre elles par une surface intermédiaire plane (402), les facettes de la surface de dépouille (401) formant avec le plan perpendiculaire à la base (2) un premier angle de dépouille ($\alpha$1), la surface de dépouille (403) étant formée par rapport à la base (2) par un troisième angle de dépouille ($\alpha$3) et la surface intermédiaire (402) par un deuxième angle de dépouille ($\alpha$2), et dans laquelle les plans des surfaces frontales principales (31), des surfaces frontales secondaires (32) et des surfaces de coupe d'entraînement frontales (34) sont inclinés en direction des taillants principaux (5), des taillants secondaires (6) et des taillants d'entraînement (7) en formant l'angle frontal ($\Gamma$0), **caractérisée en ce que** l'on applique la relation $\alpha1 \leq \alpha2 \leq \alpha3$.

**2.** Plaquette de coupe selon la revendication 1,
**caractérisée en ce que** le premier angle de dépouille ($\alpha$1) se situe de préférence dans la plage de valeurs :

$$0° \leq \alpha1 \leq 3°.$$

**3.** Plaquette de coupe selon la revendication 1 ou 2, **caractérisée en ce que** le deuxième angle de dépouille ($\alpha$2) se situe de préférence dans la plage de valeurs :

$$3° \leq \alpha2 \leq 8°.$$

**4.** Plaquette de coupe selon l'une quelconque des revendications 1 à 3, **caractérisée en ce que** le troisième angle de dépouille ($\alpha$3) se situe de préférence dans la plage de valeurs :

$$6° \leq \alpha3 \leq 20°.$$

**5.** Plaquette de coupe selon l'une quelconque des revendications 1 à 4, **caractérisée en ce que** la largeur de la facette de la surface de dépouille latérale (401) est constante.

**6.** Plaquette de coupe selon l'une quelconque des revendications 1 à 5, **caractérisée en ce que** l'angle frontal ($\Gamma$0) se situe dans la plage de valeurs :

$$0° \leq \Gamma0 \leq 30°.$$

**7.** Plaquette de coupe selon l'une quelconque des revendications 1 à 6, **caractérisée en ce que** les surfaces frontales principales (31), ainsi que les surfaces frontales secondaires (32) sont munies d'une facette frontale (33).

8. Plaquette de coupe selon l'une quelconque des revendications 1 à 7, **caractérisée en ce que** les parties descendantes des surfaces frontales principales (31) et/ou des surfaces frontales secondaires (32) sont munies de nervures.

9. Plaquette de coupe selon l'une quelconque des revendications 1 à 8, **caractérisée en ce que** les nervures (8) ont la forme de calottes sphériques.

10. Plaquette de coupe selon la revendication 8 ou 9, **caractérisée en ce que** les nervures (8) sont formées par deux calottes sphériques, qui sont reliées entre elles par une surface cylindrique.

11. Plaquette de coupe selon l'une quelconque des revendications 8 à 10, **caractérisée en ce que** les nervures (8) sont formées par deux calottes sphériques qui sont reliées entre elles par une surface cylindrique, qui est en appui contre un plan traversant le bord intérieur de la facette frontale (33).

# FIG. 1

FIG. 2

FIG. 3

FIG. 4